# EUROPEAN PATENT APPLICATION

(11) **EP 2 112 586 A1**
(43) Date of publication of application: **28.10.2009**
(21) Application number: 08021361.4
(22) Date of filing: 09.12.2008
(51) Int. Cl.: G06F 3/048, G06F 3/00

(54) **Operation method of user interface and computer readable medium and portable device**

(30) Priority: 25.04.2008 TW 97115362
(71) Applicant: HTC Corporation, Taoyuan County 330 (TW)
(72) Inventor: Chen, Yu-Chuan, Taoyuan City Taoyuan County 330 (TW); Chen, Chung-Cheng, Taoyuan City Taoyuan County 330 (TW)
(74) Representative: Becker, Eberhard

(57) **Abstract**

An operation method of a user interface suitable for performing an input operation on an input panel displayed on a display is provided. The input panel comprises a plurality of keys. The operation method includes deciding an input command through one of the keys of the input panel. Then, a vision feedback represented by an image is displayed within a display area of a display.

## Description

### BACKGROUND OF THE INVENTION

### 1. Field of the Invention

The present invention relates to an operation method of a user interface of a portable device, in particular, to a user interface using an operation method in which an image serves as a vision feedback in response to an input command.

### 2. Description of Related Art

With the continuous progress of input apparatus technique, there is a trend for manufacturers of electronic products such as conventional electronic input apparatuses and portable multimedia players to use touch screens as a new-generation input interfaces to replace conventional physical keypads. Taking a cell phone as an example, the user when operating an electronic device with a keypad must read the picture displayed on the screen while pressing the keypad, so as to successfully finish operations such as word inputting or menu switching. However, if a touch screen is applied in the electronic device, the user can directly finish operations of word inputting or activating application programs by simply clicking with a stylus or directly pressing with his finger on the screen. Therefore, the touch screen provides a more flexible and convenient input manner.

However, different from the conventional physical keypad input manner, when selecting the keys on a touch screen, no substantial input feedback will be generated. That is to say, when inputting on a touch screen, the user cannot get tactile and auditory feedbacks which used to be generated by the rebound of the keypad when inputting commands with the physical keypad. As a result, when the user is operating the multiple keys in the input panel displayed on the display, it is difficult for the user to confirm whether the input actions are performed depending on the tactile or auditory feedback. Further, for the keys in the input panel displayed on the current displays, the keys are in one-to-one correspondence to the letters, symbols, or digits, so the layout of the entire input panel is complicated and the input panel occupies a larger display area of the display.

### SUMMARY OF THE INVENTION

The present invention is directed to an operation method of a user interface, which enables the user to confirm the input actions he/she has taken by displaying an image representing a vision feedback.

The present invention is also directed to a computer readable medium which enables a portable device to have a relatively simplified layout of an input panel.

The present invention is still directed to provide a portable device having an input panel which occupies a smaller display area of the display.

The present invention provides an operation method of a user interface suitable for performing an input operation on an input panel having a plurality of keys displayed on a display. The method includes receiving an input command through one of the keys of the input panel. Then, an image representing a vision feedback is displayed in a display area of the display.

In an operation method of a user interface according to an embodiment of the present invention, the display is a touch screen. The touch screen is a resistive touch screen or a capacitive touch screen.

In an operation method of a user interface according to an embodiment of the present invention, the input panel is a software keypad. The software keypad is a full QWERTY keypad, a phone keypad, or a compact QWERTY keypad.

In an operation method of a user interface according to an embodiment of the present invention, the image is presented as a window block that overlaps the key. Further, the window block is displayed in a proportion of the key. In an embodiment, the grayscale image of the window block is the same as that of the key. In another embodiment, the appearance of the arrangement of the window block is the same as that of the key.

In an operation method of a user interface according to an embodiment of the present invention, each of the keys at least corresponds to two alphanumerics or a function input. The operation method of the user interface also includes confirming one of the alphanumerics or the function input that is output in response to receiving the input command according to the input command generated by the input panel. Then, the confirmed alphanumeric or the function input is output on the display. The step of outputting the confirmed alphanumeric or the function input on the display further includes outputting one of the corresponding alphanumerics when the time for deciding the input command is smaller than a preset value. Also, when an input time for deciding the input command reaches a preset value, one of the corresponding alphanumerics is output at a time interval within the input time. Further, when an input time for deciding the input command reaches a preset value, one of the corresponding alphanumerics is repetitively output within the input time. Also, when an input time for receiving the input command reaches a preset value, one of the corresponding alphanumerics is continually output within the input time.

In an operation method of a user interface according to an embodiment of the present invention, one of the keys is a mode switching key.

In an operation method of a user interface according to an embodiment of the present invention, the vision feedback includes a vision highlight.

The present invention further provides a computer readable medium suitable for responding an input operation on an input panel displayed on a display. The input panel has a plurality of keys, and the computer readable medium includes a receiving module and a displaying module. The receiving module receives an input command through one of the keys of the input panel. The displaying module is used to display an image representing a vision feedback in a display area of the display.

In a computer readable medium according to an embodiment of the present invention, the display is a touch screen. The touch screen is a resistive touch screen or a capacitive touch screen.

In a computer readable medium according to an embodiment of the present invention, the input panel is a software keypad, and the software keypad is a full QWERTY keypad, a phone keypad, or a compact QWERTY keypad.

In a computer readable medium according to an embodiment of the present invention, the image is presented as a window block which overlaps the key. Also, the window block is displayed in a proportion of the key. In addition, the grayscale image of the window block is the same as that of the keys. In another embodiment, the appearance of the arrangement of the window block is the same as that of the key.

In a computer readable medium according to an embodiment of the present invention, each of the keys at least corresponds to two alphanumerics or a function input. The computer readable medium also includes a confirming module and an output module. The confirming module confirms the alphanumeric that is output in response to receiving the input command according to the input command generated by the input panel. The signal output module outputs the confirmed alphanumeric on the display. In addition, the output module further includes an input time determining module for outputting one of the corresponding alphanumerics when the time for deciding the input command is smaller than a preset value. The input time determining module is also used to output one of the corresponding alphanumerics at a time interval within an input time when the input time for deciding the input command reaches a preset value. In addition, the input time determining module is also used to repetitively output the corresponding alphanumeric within an input time when the input time for deciding the input command reaches a preset value. Furthermore, the input time determining module is also used to continually output one of the corresponding alphanumerics within an input time when the input time for deciding the input command reaches a preset value.

In a computer readable medium according to an embodiment of the present invention, one of the keys is a mode switching key.

In a computer readable medium according to an embodiment of the present invention, the vision feedback includes a vision highlight.

The present invention further provides a portable device, which includes a touch and display unit, a receiving module, and a displaying module. The touch and display unit displays an input control panel having a plurality of input keys. The receiving module is used to receive an input command through one of the input keys in the input panel. The displaying module is used to display a window block representing a vision feedback in a display area of the touch and display unit.

In a portable device according to an embodiment of the present invention, the window block directly overlaps the input key.

In a portable device according to an embodiment of the present invention, each of the input keys at least corresponds to two alphanumerics or a function input.

A portable device according to an embodiment of the present invention further includes a confirming module and an output module. The confirming module confirms the alphanumeric that corresponds to the key receiving the input command according to the input command generated by the input panel. The signal output module is used to output the confirmed alphanumeric on the touch and display unit.

In a portable device according to an embodiment of the present invention, the input behavior includes continuously pressing.

In a portable device according to an embodiment of the present invention, the vision feedback includes a vision highlight.

In the present invention, when the user clicks a key, the receiving module of the portable device receives an input command while the displaying module displays an image representing a vision feedback on the display. However, the vision feedback is not directed to display the exact letter to be input by the user but to enable the user to confirm the input actions he/she has taken. By identifying the difference of the input time or input mode when the user generates an input command on the display, the alphanumeric or function corresponding to the input command can be confirmed and output on the display. Therefore, in the design layout of the input panel, a single key may also correspond to at least two alphanumerics so as to greatly decrease the number of keys in the input panel and decrease the display area occupied by the input panel on the display.

To make the above and other objectives, features, and advantages of the present invention more apparent, a detailed description with respect to the embodiments is made below in conjunction with the accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIGs. 1A to 1B show schematic views of an operation method of a user interface according to an embodiment of the present invention.

FIG. 2 shows a schematic diagram of a portable device according to an embodiment of the present invention.

FIG. 3 shows a flow chart of an operation method of a user interface according to an embodiment of the present invention.

FIG. 4 shows a configuration diagram of a full QWERTY keypad.

FIG. 5 shows a configuration diagram of a phone keypad.

FIG. 6 shows a configuration diagram of a compact QWERTY keypad.

### DESCRIPTION OF THE EMBODIMENTS

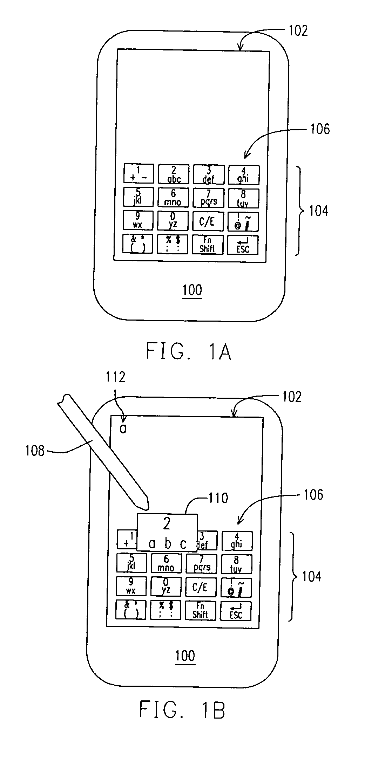

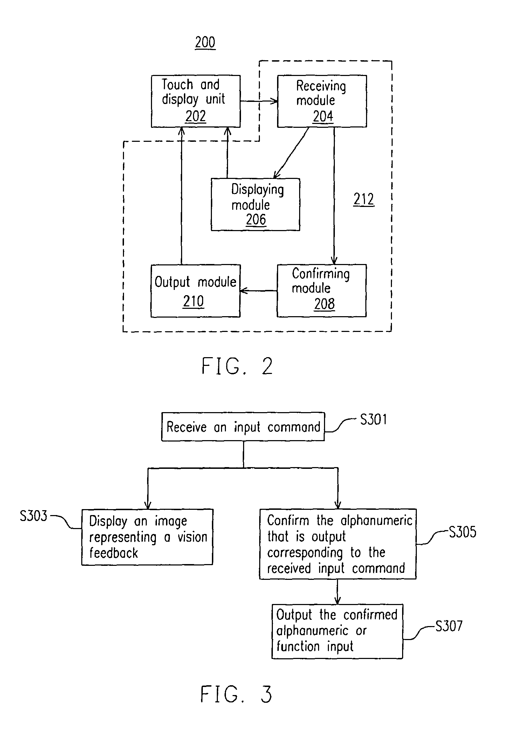

FIGs. 1A to 1B show schematic views of an operation method of a user interface according to an embodiment of the present invention. FIG. 2 shows a schematic diagram of a portable device according to an embodiment of the present invention. FIG. 3 shows a flow chart of an operation method of a user interface according to an embodiment of the present invention. Referring to FIGs. 1A, 2, and 3, a portable device 100 (i.e., the portable device 200 in FIG. 2) is first provided. The portable device 100 includes a display 102 which displays an input panel 104, and the input panel has a plurality of keys 106. The display 102 is a touch screen and the touch screen is, for example, a resistive touch screen or a capacitive touch screen.

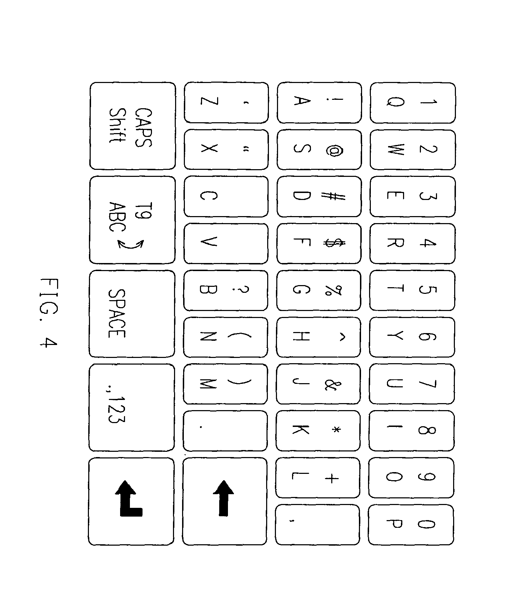

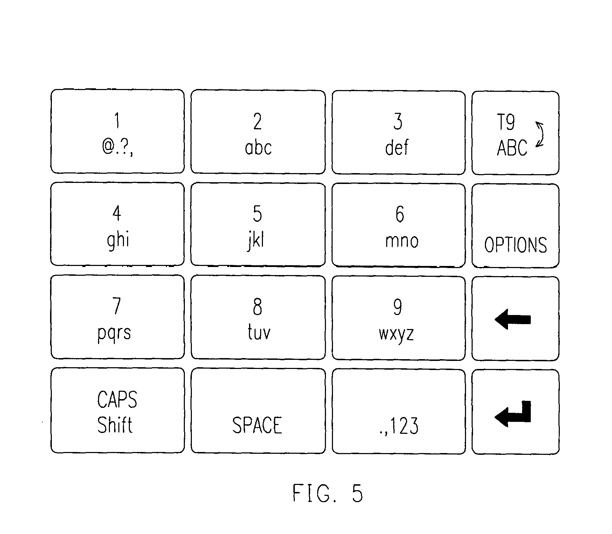

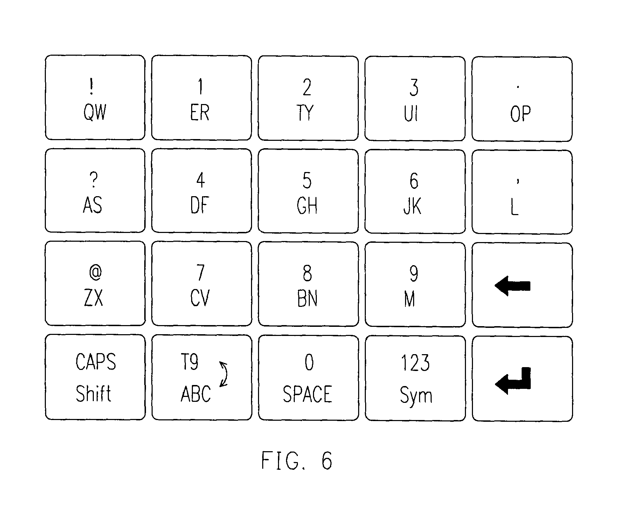

Furthermore, the input panel is, for example, a software keypad which includes a full QWERTY keypad as shown in FIG.4, a phone keypad as shown in FIG. 5, and a compact QWERTY keypad as shown in FIG. 6. In addition, each of the keys 106 at least corresponds to two alphanumerics. That is to say, each key 106 at least includes two of a letter, a digit, and a symbol. The letter includes an English letter, a phonetic symbol, a Chinese Bopomofo symbol, or the codes of various letter input method, etc. The digit includes an Arabic numeral, a Roman numeral, and the codes for other count input method. The symbol includes various image codes, such as a symbol like "!" , "∼" , "@" , "#" , "$" which is neither a digit nor a letter. Also, the key 106 may represent a function input key, such as a function key of "Enter". The key 106 may also represent a mode switching key, for example, for switching an ABC input method to a T9 input method.

As shown in FIGs. 1A and 2, the portable device 100/200 includes, for example, a touch and display unit 202. The touch and display unit 202 is provided with both the function of displaying and the function of receiving an input command generated by contacting the surface of the touch and display unit. Therefore, a touch and display unit 202 may establish an input panel 104. That is to say, the keys 106 in the input panel 104 are non-physical keys generated by display, and provide the signal input function by contacting the non-physical keys with an input tool. The input panel 104 as shown in FIG. 1A, the present invention includes a software keypad with 16 independent keys. However, the present invention is not limited to the drawing. As described above, the software keypad may also be a full QWERTY keypad as shown in FIG. 4, a phone keypad as shown in FIG. 5, or a compact QWERTY key as shown in FIG. 6. Furthermore, the portable device 100 is, for example, a PDA cell phone, a smart cell phone, and a touch cell phone, etc.

Referring to FIGs. 1B, 2, and 3, an input operation is performed on the input panel 104 in step S301 to receive an input command through one of the keys 106 of the input panel 104. In this embodiment, an input command is generated on a key 106 in the input panel 104 with an input tool 108 such as a finger or a stylus 108 as shown in FIG. 1B, and is received by a receiving module 204 in a computer readable software 212 of the portable device 200. Next, in step S303, a displaying module 206 in the computer readable software 212 displays an image 110 representing a vision feedback in a display area of the display 102 of the touch and display unit 202. As shown in FIG. 1B, the image 110 representing a vision feedback is, for example, presented as a window block. In this embodiment, when the input tool 108 contacts the key 106 that represents the digit " 2" and the letters "a", "b", and "c" displayed on the display 102 (the touch and display unit 202) and an input command is generated, a window block 110 serving as a vision feedback is generated on the display 102 which prompts the user that the key 106 has been pressed.

In the embodiment, the window block 110 is directly disposed on and overlaps the key 106 contacted by the input tool 108. However, the present invention is not limited to this. That is to say, the window block 110 may be located at any positions in the visible range of the display 102. In addition, the window block 110 serving as the vision feedback is displayed, for example, in proportion of the key generating the input command. That is to say, the window block 110 is an enlargement of the key generating the input command in a proportion. Also, the grayscale image of the window block 110 is the same as that of the key generating the input command, or the appearance of the arrangement of the window block 110 is the same as that of the key generating the input command. For example, the window block 110 is a directly enlarged image of the key 106 generating the input command. Furthermore, the vision feedback also includes a vision highlight. That is to say, the window block is displayed on the display 102 after being highlighted.

Then, referring to FIGs. 1B, 2, and 3, in another embodiment, after the input command is received (S301) and an image serving as the vision feedback is displayed on the display 102 (S303), the confirming module 208 in the computer readable software 212 of the portable device 200 confirms the alphanumeric corresponding to the received input command according to the input command generated by the input panel 104 (step S305). Thereafter, one of the confirmed alphanumerics or function input is output by the signal output module 210 in the computer readable software 212 and displayed on the display 102 of the touch and display unit 202 (step S307). Referring to FIG. 1B, in the embodiment, the signal confirming module 208 confirms that the alphanumeric corresponding to the input signal is the alphanumeric "a" of the key 106 that represents a digit "2" and letters "a" , "b" , and "c" and generates the input command. Therefore, the signal output module 210 displays the alphanumeric "a" (indicated by 112) on the display 210. The input behaviour includes a continuous press or a short time contact.

In an embodiment, when the input time for receiving an input command is smaller than a preset value, one of the corresponding alphanumerics is directly output. For example, when the input tool 108 continuously presses a key 106 to generate an input command and an input time for pressing the key 106 is smaller than a preset value, an alphanumeric such as a letter is output and displayed on the display 102 when the input time expires. In another embodiment, when the input time reaches a preset value, one of the corresponding alphanumerics is output at a time interval within the input time. When the input tool 108 continuously presses the key 106 to generate an input command and an input time for pressing the key 106 exceeds a preset value, one of the corresponding alphanumerics is output at a time interval within the input time.

In still another embodiment, when the input time reaches a preset value, one of the corresponding alphanumerics is continually output within the input time. For example, when the input tool 108 continuously presses a key 106 to generate an input command and an input time for pressing the key 106 exceeds a preset value, the corresponding alphanumeric is continually and repetitively output within the input time. In still another embodiment, when the input time reaches a preset value, all the alphanumerics represented by the key receiving the input command are sequentially output within the input time. That is to say, when the input tool 108 continuously presses a key 106 to generate an input command and an input time for pressing the key 106 exceeds a preset value, all the alphanumerics represented by the pressed key are sequentially output within the input time.

In the present invention, since the input panel is displayed by the touch and display unit, when the user clicks any key, the signal receiving module of the portable device receives an input command and the displaying module displays an image serving as a vision feedback on the display of the portable device in response to the user's input operation, so as to enable the user to confirm the input actions he/she has taken. By identifying the difference of the input time or input mode when the user generates the input command on the display, the alphanumeric or function corresponding to the input command is confirmed and output on the display. Therefore, in the design layout of the input panel, a single key may also correspond to at least two alphanumerics so as to greatly decrease the number of keys in the input panel and reduce the display area occupied by the input panel on the display.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An operation method of a user interface, suitable for performing an input operation on a software keypad displayed by a touch screen, wherein the software keypad is provided with a plurality of keys and each of the keys at least corresponds to two alphanumerics or a function input, the method comprising:
deciding an input command through one of the keys of the software keypad; and
displaying an image representing a vision feedback in a display area of the touch screen.

2. The operation method of a user interface according to claim 1, wherein the image is presented as a window block and the window block is displayed in a proportion of the key and a grayscale image or an appearance of the arrangement of the window block is the same as a grayscale image or an appearance of the arrangement of the key.

3. The operation method of a user interface according to claim 1, further comprising:
confirming one of the alphanumerics or the function input corresponding to the input command according to the input command decided by the software keypad; and
outputting the confirmed alphanumeric or function input on the touch screen.

4. The operation method of a user interface according to claim 3, wherein the step of outputting the confirmed alphanumeric or function input on the touch screen further comprises outputting one of the corresponding alphanumerics when a time for deciding the input command is smaller than a preset value.

5. The operation method of a user interface according to claim 3, wherein the step of outputting the confirmed alphanumeric or function input on the touch screen further comprises when a time for deciding the input command reaches a preset value, outputting one of the corresponding alphanumerics at a time interval within the time.

6. The operation method of a user interface according to claim 3, wherein the step of outputting the confirmed alphanumeric or function input on the touch screen further comprises when a time for deciding the input command reaches a preset value, continually outputting one of the corresponding alphanumerics within the input time.

7. A portable device, comprising:
a touch and display unit, displaying an input control panel, wherein the input control panel is provided with a plurality of input keys and one of the keys at least corresponds to two alphanumerics or a function input;
a receiving module, for receiving an input command through one of the input keys in the input panel; and
a displaying module, for displaying a window block representing a vision feedback in a display area of the touch and display unit.

8. The portable device according to claim 7, further comprising:
a confirming module, for confirming one of the alphanumerics or the function input that corresponds to the key receiving the input command according to the input command generated by the input panel; and
an output module, for outputting the confirmed alphanumeric or function input on the touch and display unit.

9. The portable device according to claim 7, wherein the confirming module comprises an input time determining module for respectively inputting a different one of the alphanumerics when the time for deciding the input command is smaller than or reaches a preset value.
